Europäisches Patentamt

European Patent Office

Office européen des brevets

(19)

(11) Veröffentlichungsnummer: **0 199 063**

**A2**

(12) **EUROPÄISCHE PATENTANMELDUNG**

(21) Anmeldenummer: **86103397.5**

(22) Anmeldetag: **13.03.86**

(51) Int. Cl.⁴: **B65G 47/26**

(30) Priorität: **15.04.85 DE 3513468
21.10.85 DE 3537410**

(43) Veröffentlichungstag der Anmeldung:
**29.10.86 Patentblatt 86/44**

(84) Benannte Vertragsstaaten:
**AT BE CH DE FR GB IT LI LU NL SE**

(71) Anmelder: **Interroll Fördertechnik GmbH & Co.
KG
Postfach
D-5632 Wermelskirchen 2(DE)**

(72) Erfinder: **Fass, Eberhard
Am Krupin 13a
D-5632 Wermelskirchen 1(DE)**

(74) Vertreter: **Patentanwälte Müller-Boré, Deufel,
Schön, Hertel, Lewald, Otto
Postfach 26 02 47 Isartorplatz 6
D-8000 München 26(DE)**

(54) **Vorrichtung zum abhängigen Steuern aufeinanderfolgender Abschnitte oder geregelter Bereiche, insbesondere zum akkumulierenden Fördern von Gütern.**

(57) Eine Vorrichtung beispielsweise zum akkumulierenden Fördern von Gütern weist eine Ventilanordnung aus Schaltelementen bestehend aus einem 3/2-Wege-Ventil, einem ODER-Ventil und einem Entlüftungsventil für die Steuerung des Antriebs und die Rückmeldung zwischen benachbarten Antriebsbereichen auf, wobei das 3/2-Wege-Ventil mit einem Anschluß für eine Druckluftquelle ausgebildet ist. Innerhalb des Gehäuses (86) ist ein Schieber (88) angeordnet, der über eine Feder (90) in seine Ausgangsstellung gebracht wird. Durch die erfindungsgemäße Anordnung der Ventilelemente können die Anschlußtüllen (108, 110) für eine Druckluftversorgungsleitung, die Anschlußtülle (98) für die Rückmeldeleitung, die Anschlußstutzen bzw. Anschlußtüllen für das ODER-Ventil sowie eine Anschlußtülle (134) für die zur Hebeeinrichtung des gesteuerten Förderabschnittes führende Leitung parallel und nebeneinander angeordnet werden, so daß die Verlegung der Druckluftleitungen einfach und übersichtlich wird. Die Dichtung zwischen Gehäuse (86) und Schieber (88) sind als statische Dichtungen ausgebildet. Durch die kompakte Ausbildung der verschiedenen Ventileinheiten in einem Gehäuse kann auf die Anordnung von externen Verbindungsleitungen verzichtet werden.

FIG.3

## Vorrichtung zum abhängigen Steuern aufeinanderfolgender Abschnitte oder geregelter Bereiche, insbesondere zum akkumulierenden Fördern von Gütern

Die Erfindung betrifft eine Vorrichtung zum abhängigen Steuern aufeinanderfolgender Abschnitte oder geregelter Bereiche, insbesondere zum akkumulierenden Fördern von Gütern mit einer Rollenbahn und mit getrennt steuerbaren Antriebsbereichen zum Fördern der Güter, wobei für jeden Abschnitt eine Anordnung aus Schaltelementen bestehend aus einem 3/2-Wege-Ventil, einem ODER-Ventil und einem Entlüftungsventil für die Steuerung des Antriebs und die Rückmeldung zwischen benachbarten Antriebsbereichen vorgesehen ist, und wobei das 3/2-Wege-Ventil mit einem Anschluß für eine Druckluftquelle ausgebildet ist.

Eine derartige, insbesondere als Fördervorrichtung ausgebildete Vorrichtung dient dazu, Güter oder Waren, die vorzugsweise in Kisten oder auf Paletten angeordnet sind, längs beispielsweise einer Rollenbahn zu transportieren, wobei die Rollenbahn in einzelne Förderabschnitte eingeteilt ist und die Weiterleitung der Güter nach Erreichen des Anfangs der Rollenbahn oder nach Auflaufen auf vom Anfang der Rollenbahn her aufgestauten Gütern abgestoppt wird, während weitere Güter noch bis zu den aufgestauten Gütern transportiert werden. Nach Entnahme einer am Anfang der Rollenbahn befindlichen Kiste oder Palette werden die dahinter angeordneten Kisten oder Paletten jeweils um einen Förderabschnitt weitertransportiert, bis die dann erste Kiste oder Palette wiederum entnommen wird.

Die Aktivierung der Förderabschnitte erfolgt vorzugsweise über Druckluft. Durch geeignete Einrichtungen werden über Druckluft die Förderabschnitte aktiviert, so daß ein Transport der auf den Rollen der Rollenbahn befindlichen Güter erfolgen kann. Zur Steuerung jedes Förderabschnittes sind eine Versorgungsleitung sowie drei Ventile erforderlich, wobei ein Ventil, das als Oderventil ausgebildet ist, für die Rückmeldung zwischen benachbarten Förderabschnitten zuständig ist, ein Ventil die Entlüftung für eine Inaktivierung eines Förderabschnittes regelt und ein Ventil eine Schnellentlüftung erbringt. Diese Ventile müssen untereinander und mit entsprechenden Ventilen benachbarter Förderabschnitte verbunden sein. Dadurch ergibt sich eine Anzahl von Verbindungsleitungen, deren Verlegung an der Förderanlage aufwendig und kostspielig ist und zudem einen großen Platzbedarf erfordert.

Es sind zur Durchführung der erforderlichen Funktionen Sitzventile bekannt, die über Steuerfahnen betätigt werden, welche über die Oberseite der Rollen hervorstehen. Zum einen sind derartige Steuerfahnen anfällig gegenüber Beschädigungen und, wie bereits ausgeführt, ist die Verbindung der einzelnen Ventile aufwendig und die Leitungen können störend für den Betrieb der Anlage sein.

Der Erfindung liegt die Aufgabe zugrunde, ein Ventil zu schaffen, das leichtgängig und billig ist und dessen Verlegung ohne großen Aufwand einfach an der Anlage erfolgen kann.

Diese Aufgabe wird erfindungsgemäß dadurch gelöst, daß der Anschluß für die Zuführung und ein Anschluß für die Weiterleitung der Druckluft, das mit einem Schieber ausgebildete 3/2-Wege-Ventil, das ODER-Ventil und das Entlüftungsventil in einem Gehäuse angeordnet sind.

Diese Aufgabe wird erfindungsgemäß dadurch gelöst, daß ein Anschluß für die Zuführung und ein Anschluß für die Abführung der Druckluft, das Rückmeldeventil, das Entlüftungsventil und ein Schnellentlüftungsventil in einem Gehäuse angeordnet und als Schieberventil mit einem gemeinsamen Schieber ausgebildet sind.

Bei der erfindungsgemäßen Schieberanordnung sind keine Versorgungsleitung mit T-Anschlußstücken und keine die einzelnen Ventile miteinander verbindenden externen Leitungen erforderlich, da diese Verbindungsleitungen in eihem einzigen Gehäuse ausgebildet sind.

Wenn vorzugsweise die Anschlußtüllen für die Versorgungsleitung und für die Rückmeldeleitung und die Anschlußtülle zu der Aktivierungseinrichtung für den Antrieb des zugehörigen Förderabschnittes parallel und in Förderrichtung angeordnet sind, können diese Leitungen beispielsweise an einer Fläche des Seitenrahmens nebeneinander verlegt werden, so daß eine unübersichtliche Leitungsanhäufung mit Abzweigungen und dergleichen entfällt.

Gemäß einer bevorzugten Ausführungsform sind die Dichtungen zwischen Ventilkörper und Schieber als statische Dichtungen ausgebildet. Gegenüber herkömmlichen Ventilen ist die Anzahl der Dichtungen stark verringert und durch die Anordnung als statische Dichtungen, d.h. die Dichtringe sind innerhalb des Gehäuses und nicht in dem Schieber angeordnet, wird deren Lebensdauer stark erhöht.

Gemäß einer bevorzugten Ausführungsform besteht das Ventilgehäuse aus einem oberen Deckel, an dem die Anschlußtülle für die Rückmeldeleitung und ein Anschlußstutzen für das ODER-Ventil angeformt sind, aus einem unteren Deckel, aus einem mit den Anschlußtüllen für die Versorgungsleitung versehenen Teil und aus einem Verbindungsabschnitt, und diese Teile sind über Spannschrauben miteinander verspannt. In dem oberen Deckel ist eine Durchgangsbohrung zum Durchtritt eines an dem Schieber angeordneten Schaltzapfens ausgebildet.

Der Anschlußstutzen bildet einen Abschnitt des ODER-Ventils und ist vorzugsweise über Schnappsitz mit einem Gehäuseteil des ODER-Ventils verbunden.

Das Ventil besteht vorzugsweise aus Kunststoff. Das Entlüftungsventil ist vorzugsweise als Schnellentlüftung ausgebildet.

Zur einfachen Befestigung des Ventils beispielsweise an dem die Rollen tragenden Rahmen sind vorzugsweise Befestigungsbohrungen an dem Gehäuse und insbesondere an der Außenseite des oberen Deckels angeformt.

Die Rückstellung des Schiebers in seine Ausgangsstellung, bei welcher der nach außen ragende Schaltzapfen am weitesten aus dem Gehäuse ragt, erfolgt über eine im Inneren des Schiebers angeordnete Rückstellfeder, die vorzugsweise als Schraubendruckfeder ausgebildet ist.

In Weiterbildung der Erfindung liegt bei einer Anlage zum akkumulierenden Fördern von Gütern der Schaltzapfen an einem an dem Rahmen der Rollenbahn angelenkten Hebel an, und an dem Hebel ist mit einem Ende eine Schaltrolle gelagert, die mit dem anderen Ende an dem Rahmen der Rollenbahn gelagert ist. Im unbelasteten Zustand verläuft diese Schaltrolle schräg und mit einem Ende über die benachbarten Schaltrollen hinausstehend. Wenn dem Förderabschnitt ein zu transportierendes Gut zugeführt wird, fährt dieses auf die Schaltrolle auf und drückt sie nach unten, wodurch das Ventil betätigt wird, da der Schieber über den auf dem Schaltzapfen angreifenden Hebel im Inneren des Ventils verschoben wird und die zur Steuerung der A@triebe der entsprechenden Förderabschnitte erforderlichen Funktionen durchgeführt werden.

Vorzugsweise ist zur Rückstellung des Hebels, d.h. zur Unterstützung der Rückstellbewegung des Schiebers in dem Ventil, eine zwischen dem Rahmen und dem Hebel angeordnete Feder vorgesehen, die insbesondere eine Zugfeder sein kann.

Damit auch die Schaltrolle die Funktion einer tragenden Rolle übernehmen kann, ist der Weg des Hebels, an dem die Schaltrolle angelenkt ist, durch einen Anschlag begrenzt, so daß die Schaltrolle nur soweit nach unten verschwenkt werden kann, daß sie eine Stellung einnimmt, die der Stellung der benachbarten, nicht schaltenden Rollen identisch ist.

Die Erfindung wird nachstehend anhand von Ausführungsbeispielen näher erläutert. Es zeigt:

Gemäß einer weiteren bevorzugten Ausführungsform liegt der Schaltzapfen an einem am Rahmen der Rollenbahn verschiebbaren Stößel an, und an der Oberseite des Stößels liegt eine mit einem Ende in dem Rahmen gelagerte Schaltrolle mit ihrer Achse auf.

Ferner ist vorzugsweise an dem Stößel ein Arm und in dem Stößel eine Rückstellfeder angeordnet. Das Achsende der Schaltrolle und der Arm ragen vorzugsweise durch Öffnungen im Verschiebegehäuse des Stößels.

Die Erfindung wird nachstehend anhand von Ausführungsbeispielen erläutert.

Es zeigt:

Fig. 1 eine Schemaskizze eines akkumulierenden Förderers bei freiem Lauf eines Gutes,

Fig. 2 den Förderer nach Fig. 1 mit sich am Beginn der Rollenbahn aufstauendem Fördergut,

Fig. 3 einen Schnitt durch eine Ausführungsform eines Steuerventils, wobei das Schnellentlüftungsventil um 90° gedreht dargestellt ist,

Fig. 4 eine Anordnung aus einer Schaltrolle und einem Ventil nach Fig. 3 an einer Rollenbahn, und

Fig. 5 bis 7 eine weitere Anordnung an Schaltrolle und Ventil nach Fig. 3 in Seitenansicht, in Schnitt und in Draufsicht.

Die Erfindung wird beispielsweise anhand einer Vorrichtung zum akkumulierenden Fördern von Gütern erläutert.

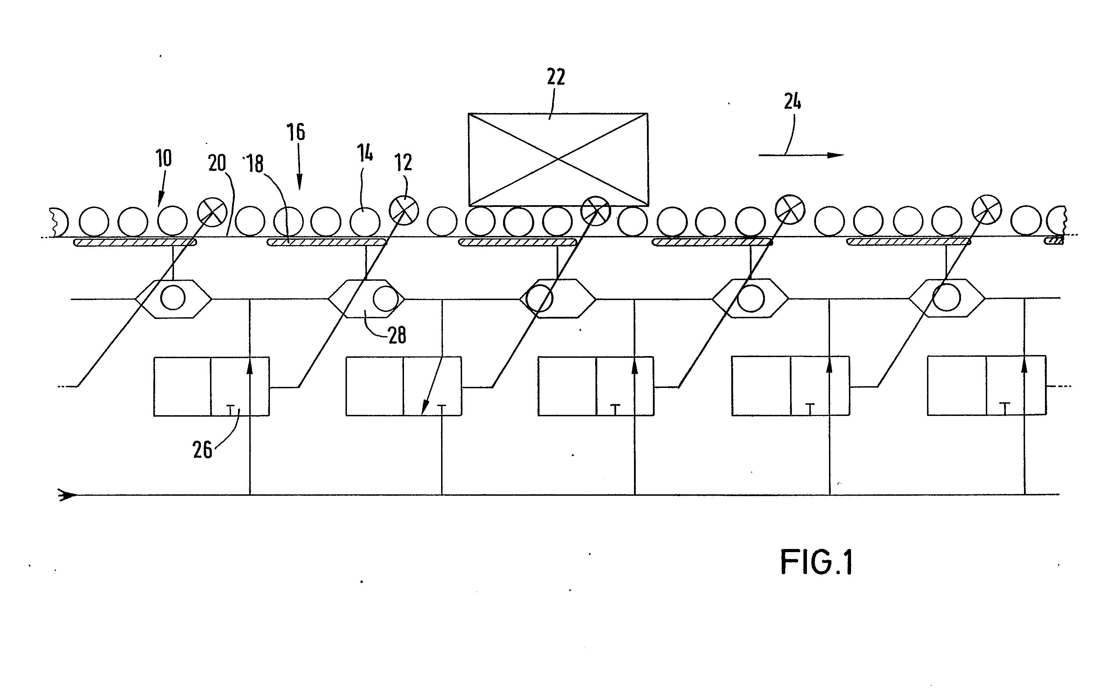

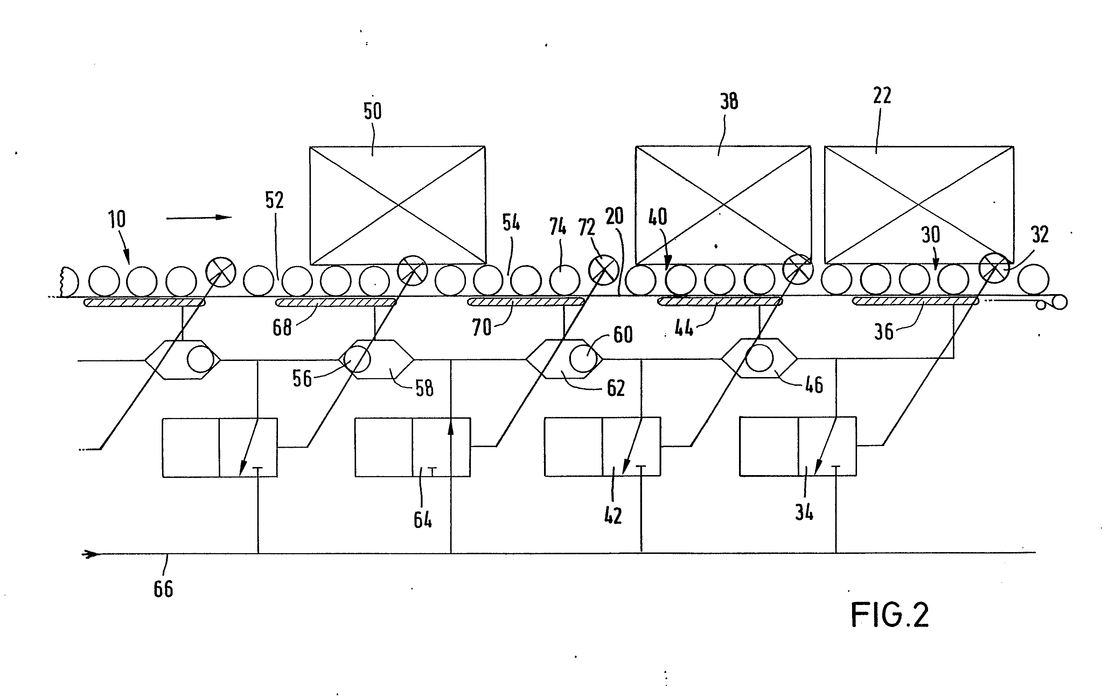

In Fig. 1 ist schematisch ein akkumulierender Förderer 10 gezeigt, bei welchem eine Rollenbahn in getrennte Förderabschnitte aufgeteilt ist. Jeder Förderabschnitt besteht aus einer Schaltrolle 12 mit dahinter angeordneten normalen tragenden Rollen 14, die in den Seitenträgern des Rahmens abgestützt sind. Jedem Förderabschnitt 16 ist eine Hebevorrichtung 18 zugeordnet, mit welcher ein Band 20 angehoben werden kann, wodurch die Rollen des Förderabschnitts 16 angetrieben werden, so daß ein Fördergut 22 in Richtung des Pfeiles 24 zum Anfang der Rollenbahn 10 transportiert wird. Die Steuerung der Förderabschnitte 16 erfolgt über Ventile 26 und 28. Wenn der am Bahnanfang befindliche Förderabschnitt 30 (siehe Fig. 2) nicht belegt ist, werden die nebeneinander angeordneten Förderabschnitte 16 nacheinander aktiviert, so daß das Fördergut 22 bis zum Anfang der Rollenbahn 10 transportiert wird. Sobald das Fördergut 22 den Förderabschnitt 30 erreicht und die Schaltrolle 32 überlaufen hat, erhält das Ventil 34 einen Steuerbefehl zum Inaktivieren der Hebevorrichtung 36, so daß in diesem Förderabschnitt 30 das Band 20 nicht mehr angetrieben wird. In Fig. 2 ist hinter dem Fördergut 22 ein Fördergut 38 dargestellt, das den zweiten Förderabschnitt 40 erreicht hat. Dieses Fördergut 38 verbleibt stillstehend auf der Rollenbahn, bis das Fördergut 22 von der Rollenbahn entnommen ist. In diesem Augenblick erfolgt eine Rückmeldung an das dem Förderabschnitt 40 zugehörige Ventil 42, wodurch die Hebevorrichtung 44 aktiviert und die Rollen des Förderabschnitts 40 und des Förderabschnitts 30 angetrieben werden, so daß das Fördergut 38 bis zum Bahnanfang geleitet werden kann. Die Rückmeldung erfolgt über ein ODER-Ventil 46, das zusammen mit dem Ventil 42 und einem Schnellentlüftungsventil die dem Förderabschnitt 40 zugeordnete Ventileinheit dartellt.

Ein Fördergut 50 befindet sich in der Darstellung nach Fig. 2 zum Teil auf einem Förderabschnitt 52 und z.T. auf einem Förderabschnitt 54. Wie aus der Stellung von Ventilkugeln 56 in einem Ventil 58 und 60 in einem Ventil 62 zu ersehen ist, wird über das Ventil 64 aus der Druckuftleitung 66 Druckluft an die Hebevorrichtung 68 sowie die Hebevorrichtung 70 zugeführt, so daß die Rollen der Transportabschnitte 52 und 54 durch das über die Hebevorrichtung 68 und 70 angehobene Band angetrieben werden und das Fördergut 50 in Richtung der aufgestauten Güter 38 und 22 transportiert wird. Wenn das Gut 50 die Schaltrolle 72 des Förderabschnittes 54 erreicht, wird das Ventil 64 betätigt und es erfolgt eine Entlüftung der Hebevorrichtung 70, so daß diese Hebevorrichtung abgesenkt wird und das antreibende Band 20 von der Unterseite der Rollen des Förderabschnitts 54 entfernt wird. Während des Absenkens wird gleichzeitig die Rolle 74 neben der Schaltrolle 72 abgebremst, so daß das Fördergut 50 zum Stillstand kommt, ohne auf das Fördergut 38 aufzulaufen. Je nach der Schwere der Fördergüter kann durch die Leitung 66 Druckluft mit einem Druck von etwa 2 bis etwa 6 Atü zugeführt werden, so daß das Band 20 mehr oder weniger stark an die Förderrollen angepreßt wird.

Bei dem anhand der Fig. 1 und 2 beschriebenen Förderer werden zum Aktivieren der Förderabschnitte Hebevorrichtungen verwendet, die pneumatisch betätigt werden und die ein unter den Rollen der Rollenbahn umlaufendes Band gegen die Rollen eines Förderabschnitts drücken, so daß diese angetrieben werden. Die Steuerung und das die Steuerung durchführende Ventil können aber auch bei anderen abhängig gesteuerten Vorrichtungen mit aufeinanderfolgenden geregelten Abschnitten wie bei akkumulierenden Förderern mit anderen Antriebseinrichtungen eingesetzt werden. Beispielsweise ist es möglich, eine zwischen geteilten Rollen umlaufende Kette über aufblasbare Schlauchabschnitte anzuheben, so daß der jeweilige angehobene Abschnitt der Kette an der Unterseite des zu transportierenden Gutes angreift, um dieses zu dem Anfang der Rollenbahn hin zu transportieren.

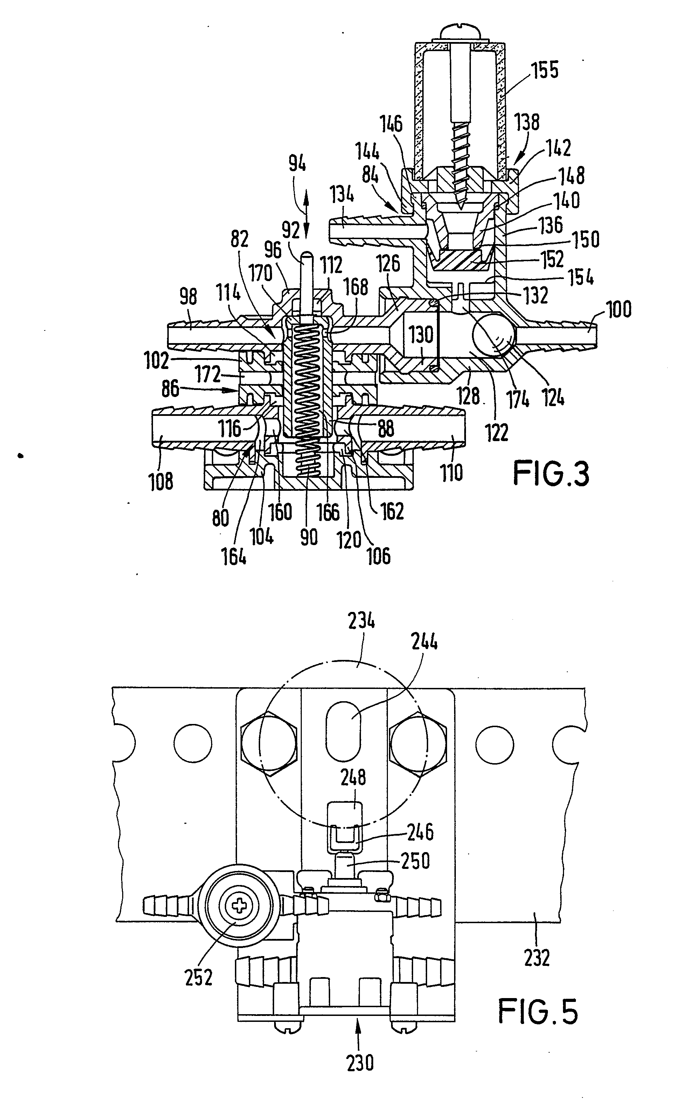

Fig. 3 zeigt einen Schnitt durch ein Ventil in Form eines 3/2-Wege-Ventils, in welcher ein Versorgungteil 80, ein Rückmeldeventil 82, ein Entlüftungsventil 84 mit einem Schnellentlüftungsteil 138 in einem gemeinsamen Gehäuse 86 zusammengefaßt sind. Betätigt wird die Ventilanordnung über einen Schieber 88, der über eine im Inneren angeordnete Druckfeder 90 in seine Ausgangsstellung verschoben wird, bei welcher ein an dem Schieber 88 befestigter Schieberzapfen 92 aus dem Gehäuse 86 ragt. Die Schieberbewegung ist durch den Pfeil 94 angedeutet.

Das Ventilgehäuse 86 besteht aus einem oberen Deckel 96, an dem eine Anschlußtülle 98 für die Rückmeldeleitung zu einem Ventil eines vorhergehenden Förderabschnitts angeordnet ist. An diesen Deckel 96 schließt sich ein Verbindungsabschnitt 102 in Form eines Mittelteils an. Zwischen dem Verbindungteil 102 und einem unteren Deckel 104 ist ein Teil 106 vorgesehen, an welchem Anschlußtüllen 108 und 110 für de Versorgungsleitung angeformt sind. Die Teile 96, 102, 104 und 106 sind über nicht dargestellte Spannschrauben miteinander dicht verbunden. Die Abdichtung zwischen dem Schieber 88 und den Gehäuseteilen erfolgt über statische Dichtungen 112, 114, 116 und 120, wobei die Dichtungen 114, 116 und 120 gleichzeitig die Dichtung zwischen den Teilen erbringen. Die Dichtung 112 dichtet den Schieberzapfen 92 ab.

Der Anschlußtülle 98 gegenüber ist ein Anschlußstutzen 126 an dem Deckel angeformt, der Teil eines ODER-Ventils 122 bildet, in welchem eine Kugel 124 beweglich ist. Diese Kugel 124 dichtet entweder eine Anschlußtülle 100 oder den Anschlußstutzen 126 ab. Der Körper 128 des ODER-Ventils ist über einen Flansch 130 mit dem Anschlußstutzen 126 verbunden. Zur Abdichtung zwischen dem Flansch 130 und dem Stutzen 126 ist eine Ringdichtung 132 vorgesehen.

Aus Fig. 3 ist zu ersehen, daß an dem Körper 128 des ODER-Ventils 122 eine Anschlußtülle 134 angeformt ist, an welche die zu der Hebevorrichtung zur Aktivierung des Förderabschnittes führende Leitung angeschlossen wird. Ferner ist an dem Körper 128 ein zylindrischer Flansch 136 vorgesehen, in welchem das Schnellentlüftungsventil 138 angeordnet ist. Das Schnellentlüftungsventil 138 weist einen sich nach innen konisch verjüngenden Rohrabschnitt 140 auf, der über einen Haltering 142 in dem Flansch 136 gehalten wird. Der Haltering 142 weist einen hinterschnittenen Flansch oder hinterschnittene Flanschabschnitte 144 auf, die eine Außenschulter 146 an dem Flansch 136 hintergreifen. Abgedichtet ist der Rohrabschnitt 140 über eine Ringdichtung 148. Die verjüngte Stirnfläche 150 des Abschnittes 140 dient der Anlage einer Ventilplatte 152, die mit dieser Stirnfläche 150 abdichtet, wenn Druckluft durch das Gehäuse 122 und die Anschlußtülle 134 der Hebevorrichtung zugeführt wird. Wenn die Hebevorrichtung entlüftet wird, d.h., wenn keine Druckluft mehr in dem Gehäuse 122 enthalten und der Anschlußtülle 134 zugeführt wird, drückt der in der mit der Anschlußtülle 134 verbundenen Leitung vorhandene Druck die Ventilplatte 152 nach unten, so daß sie auf einer Fläche 154 am Boden des Flansches 136 aufsitzt. Dadurch kann die Druckluft über die Tülle 134 schnell durch den großen Querschnitt des Rohrabschnittes 140 zur Atmosphäre hin strömen, so daß das Inaktivieren des jeweiligen Förderabschnittes sehr schnell erfolgen kann. Zum Schutz des Schnellentlüftungsventils 138 ist eine kappenförmige luftdurchlässige Abdeckung 155, beispielsweise aus Sinterbronze, vorgesehen.

Über eine an der Tülle 108 befestigte Leitung wird Druckluft zugeführt, die, wenn der Schieber 88 in seiner Ausgangsstellung ist, über einen Kanal 160 und einen Kanal 162 direkt der Anschlußtülle 110 zugeführt wird, um von dort über eine Leitung einem benachbarten Ventil zugeleitet zu werden. Wenn der Schieber in seine untere Stellung verschoben ist, sind die Kanäle 160 und 162 an einem Ende verschlossen. Versorgungsdruckluft wird dann der Tülle 110 über einen Ringkanal 164 zugeleitet, so daß die Druckluftversorgung zu benachbarten Ventilen ständig gewährleistet ist. Durch die Ausbildung des Ringkanals sind Abzweigungs-und-Verbindungsleitungen, die außerhalb anzuordnen wären, überflüssig.

Wenn der Schieber 88 in seiner in Fig. 3 gezeigten Ausgangsstellung ist, gelangt Druckluft über die Tülle 108 und den Kanal 160 in den Innenraum 166 des Schiebers 88. Von dort tritt die Luft durch Durchgangsbohrungen 168 in die Anschlußtülle 98 und den Anschlußstutzen 126, um von da über Leitungen mit benachbarten Ventilen in Verbindung zu stehen. Gleichzeitig wird über die Tülle 134 Druckluft der Hebe-oder Aktivierungsvorrichtung zugeführt, so daß der Förderab schnitt aktiviert ist und ein Fördern des auf der Rollenbahn befindlichen Gutes erfolgt. Da in diesem Zustand auch über die Tülle 100 von einem folgenden Ventil Druckluft an dem Gehäuse 128 anliegt, ist die Kugel 124 nicht in dichtender Anlage in dem Gehäuse.

Wenn beispielsweise ein zu förderndes Gut den Anfang der Rollenbahn erreicht hat, wird der erste Förderabschnitt abgestoppt und es erfolgt eine Entlüftung über das Entlüftungsventil 84 , so daß dieser Förderabschnitt inaktiviert ist. Wenn ein zu transportierendes Gut den zweiten Förderabschnitt erreicht hat, wird der Schieber in dem zugehörigen Ventil verschoben, so daß die Luft aus der an der Tülle 98 angeschlossenen Leitung an dem verjüngten oberen Teil 170 des Schiebers 88 vorbeistreichen und durch einen Kanal 172 im Verbindungsteil 86 ausströmen kann. Die Kugel 124 würde wiederum nicht abdichten, während die Kugel des vorhergehenden Ventils in einer abdichtenden Stellung an einer der Tülle 100 entsprechenden Tülle anliegen würde, so daß dieser Förderabschnitt aktiviert ist, da der Hebevorrichtung Druckluft zugeführt wird. Aus dem Gehäuse 122 wird der Tülle 134 Druckluft über eine Mittelbohrung 174 zugeleitet. Verschiedene andere mögliche Ventilstellungen, insbesondere die Stellung der Kugel 124, sind aus den Fig. 1 und 2 ersichtlich.

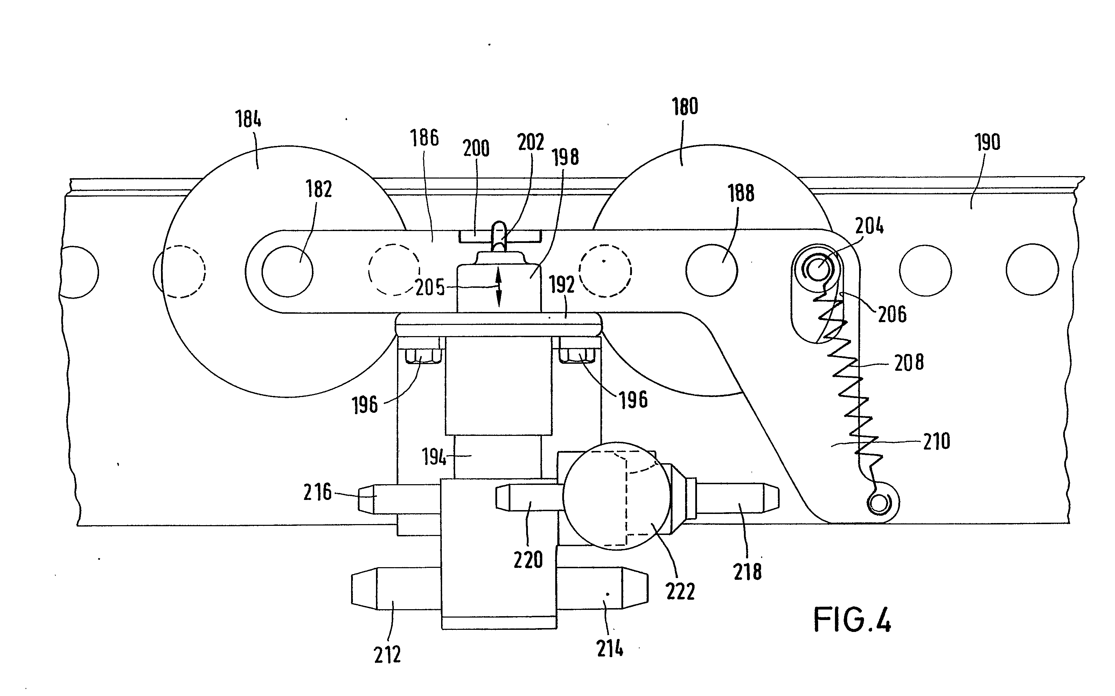

Fig.4 zeigt eine mögliche Ausbildung eines Schaltorgans und die Anordnung eines Ventils an einer Rollenbahn zur akkumulierenden Förderung von Gütern. Die Schaltung des Ventils erfolgt dabei über eine Schaltrolle 180. Im unbelasteten Zustand ist die Schaltrolle 180 schräg an der Rollenbahn angeordnet und steht mit einem Ende über die benachbarten Rollen über. An der Achse 182 einer benachbarten Rolle 184 ist ein L-förmiger Hebel 186 mit einem Ende gelagert. Die Schaltrolle 180 ist mit ihrer Achse 188 in diesem Hebel 186 gelagert. Das gegenüberliegende Ende der Schaltrolle 180 ist an dem Rahmen der Rollenbahn angeordnet. Zwischen den Rollen 184 und 180 ist am Rahmen 190 eine Befestigungsplatte 192 angeordnet, an welcher ein Ventil 194 über Schrauben 196 befestigt ist. Ein Abschnitt 198 des Gehäuse des Ventils 194 ist durch eine Durchgangsbohrung in der Platte 192 geführt. An dem Hebel 186 ist eine Anschlagplatte 200 angeordnet, gegen deren Unterseite das Ende eines aus dem Gehäuse 198 geführten Schieberzapfens 202 ansteht. Durch Verschwenken des Hebels 186 um das Lager 182 der Rolle 184 wird der Zapfen 202 in Richtung des Pfeiles 205 verschoben, so daß die erforderlichen Steuerfunktionen durchgeführt werden können. Verschwenkt wird der Hebel 186, wenn ein zu förderndes Gut auf die Rolle 180 auffährt und diese nach unten drückt. Zur Begrenzung des Schwenkweges des Hebels 180 ist an dem Rahmen 190 der Rollenbahn ein Zapfen 204 befestigt, der durch ein Langloch 206 in dem Hebel 186 ragt. Wenn die Schaltrolle 180 nach unten verschwenkt ist, sitzt die Oberseite des Langloches 206 auf dem Zapfen 204 auf und die Rolle übernimmt wie die benachbarten Rollen 184 eine tragende Funktion. Die Rückstellbewegung des Ventils 194 wird unterstützt durch eine Zugfeder 208, die an dem Zapfen 204 und an dem Ende eines Querschenkels 210 des Hebels 186 befestigt ist. Wenn kein zu förderndes Gut auf der Rolle 180 aufsitzt, wird der Hebel 186 über die Zugfeder 208 nach oben gezogen, wodurch der Schieber in dem Ventil seine Ausgangsstellung bei herausgeschobenem Ventilzapfen einnehmen kann.

Aus Fig. 4 ist die zur Vereinfachung der Verlegung der Leitung sinnvolle Anordnung der Anschlußtüllen ersichtlich. Anschlußtüllen 212 und 214 für die Druckluftversorgungsleitung, Anschlußtüllen 216 und 218 für die Rückmeldeleitung zu benachbarten Förderabschnitten, sowie eine Anschlußtülle 220 für die Druckluftleitung zu einer Hebeeinrichtung sind parallel zueinander vorgesehen, so daß die entsprechenden Leitungen ebenfalls parallel neben dem Rahmen 190 einer Rollenbahn verlegt werden können. T-Anschlüsse und Verzweigungen sind bei dieser Ventilanordnung nicht mehr erforderlich. Aus Fig. 4 ist zu ersehen, daß zwischen der Anschlußtüllen 220 und 218 ein Schnellentlüfter 222 vorgesehen ist.

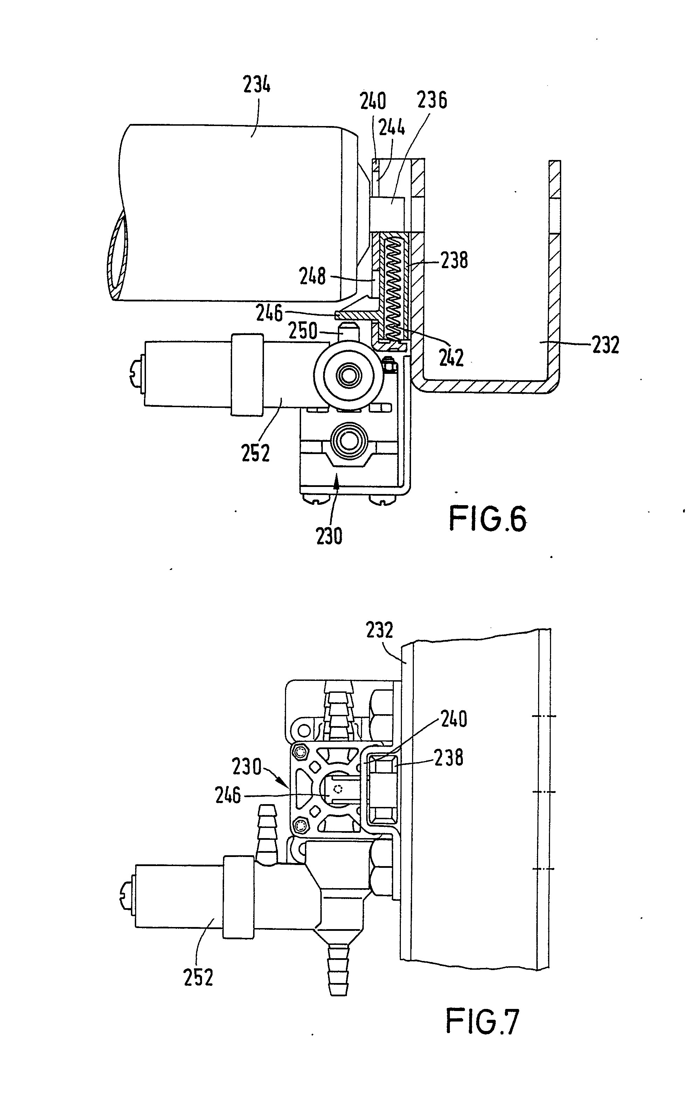

In den Fig. 5 bis 7 ist eine weitere Anwendung der anhand Fig. 3 erläuterten Ventilanordnung gezeigt. Wie bei den Ausführungsbeispielen nach Fig. 4 ist eine Ventilanordnung 230 an dem Rahmen 232 einer Rollenbahn befestigt. Die Ventilanordnung 230 arbeitet mit einer Schaltrolle 234 zusammen, die mit einem Ende in dem Rahmen 232 der Rollenbahn gelagert ist. Das andere Ende einer Achse 236 der Rolle 234 liegt auf einem Stößel 238 auf, der in einem Gehäuse 240 verschiebbar geführt ist. Im Inneren des Stößels 238 ist eine Rückstellfeder in Form einer Druckfeder 242 angeordnet. Wenn die Schaltrolle 234 nicht belastet ist, drückt die Schraubenfeder 242 den Stößel 238 zusammen mit dem Achsende 236 nach oben, bis das Achsende 236 an der Oberseite einer Durchgangsöffnung 244 in dem Gehäuse 240 anliegt. An der Außenseite des Stößels 238 ist ein Arm 246 angeordnet, der durch eine Öffnung 248 in dem Gehäuse 240 ragt. Die Unterseite des Armes 246 liegt an der Oberseite eines Schieberzapfens 250 der Ventilanordnung 230 an. Bei der in den Fig. 5 bis 7 gezeigten Stellung ist die Rolle 234 belastet, was gleichzeitig bedeutet, daß der der Rolle 234 zugeordnete Antriebsabschnitt aktiviert ist. Wie aus den Fig. 5 bis 7 ferner hervorgeht, ist das Schnellentlüftungsventil 252 etwa senkrecht zur Achse des Schieberzapfens 250 angeordnet, so daß alle Anschlußtüllen der Ventilanordnung 230 parallel zueinander verlaufen. In Fig. 3 ist aus Darstellungsgründen das zugehörge Schnellentlüftungsventil um 90° verschwenkt, so daß es dort parallel zur Achse des Schieberzapfens verläuft.

**Ansprüche**

1. Vorrichtung zum abhängigen Steuern aufeinanderfolgender Abschnitte oder geregelter Bereiche, insbesondere zum akkumulierenden Fördern von Gütern mit einer Rollenbahn und mit getrennt steuerbaren Antriebsbereichen zum Fördern der Güter, wobei für jeden Abschnitt eine Anordnung aus Schaltelementen bestehend aus einem 3/2-Wege-Ventil, einem ODER-Ventil und einem Entlüftungsventil für die Steuerung des Antriebs und die Rückmeldung zwischen benachbarten Antriebsbereichen vorgesehen ist, und wobei das 3/2-Wege-Ventil mit einem Anschluß für eine Druckluftquelle ausgebildet ist, dadurch **gekennzeichnet**, daß der Anschluß (108) für die Zuführung und ein Anschluß (110) für die Weiterleitung der Druckluft, das mit einem Schieber (88) ausgebildete 3/2-Wege-Ventil, das ODER-Ventil (122) und das Entlüftungsventil (84) in einem Gehäuse (86) angeordnet sind.

2. Vorrichtung nach Anspruch 1, dadurch **gekennzeichnet**, daß die Dichtungen (112, 114, 116, 120) zwischen Ventilkörper (86) und Schieber (88) als statische Dichtungen ausgebildet sind.

3. Vorrichtung nach Anspruch 1 oder 2, dadurch **gekennzeichnet**, daß die Anschlußtüllen (108, 110) für die Versorgungsleitung, die Anschlußtüllen (98, 100) für die Rückmeldeleitung, und die Anschlußtülle (134) zu der Aktivierungseinrichtung des Antriebsbereiches parallel und in Förderrichtung angeordnet sind.

4. Vorrichtung nach einem der Ansprüche 1 bis 3, dadurch **gekennzeichnet**, daß das Ventilgehäuse (86) aus einem oberen Deckel (96), an dem die Anschlußtülle (98) für die Rückmeldeleitung und ein Anschlußstutzen (126) für das ODER-Ventil (122) angeformt sind, aus einem unteren Deckel (104), aus einem mit den Anschlußtüllen (108, 110) für die Versorgungsleitung versehenen Teil (106) und aus einem Verbindungsabschnitt (102) besteht, und daß die Teile über Spannschrauben miteinander verbunden sind.

5. Vorrichtung nach Anspruch 4, dadurch **gekennzeichnet**, daß der Anschlußstutzen (126) einen Abschnitt des ODER-Ventils (122) bildet und über Schnappsitz mit einem Gehäuseteil (128) des ODER-Ventils (122) verbunden ist.

6. Vorrichtung nach einem der Ansprüche 1 bis 5, dadurch **gekennzeichnet**, daß das Ventil aus Kunststoff besteht.

7. Vorrichtung nach einem der Ansprüche 1 bis 6, dadurch **gekennzeichnet**, daß das Entlüftungsventil (84) als Schnellentlüftung ausgebildet ist.

8. Vorrichtung nach einem der Ansprüche 1 bis 7, dadurch **gekennzeichnet**, daß Befestigungsbohrungen an dem Gehäuse (104) angeformt sind.

9. Vorrichtung nach einem der Ansprüche 1 bis 8, dadurch **gekennzeichnet**, daß im Innenraum (166) des Schiebers (88) eine Rückstellfeder (90) angeordnet ist.

10. Vorrichtung nach einem der Ansprüche 1 bis 9, dadurch **gekennzeichnet**, daß an dem Schieber (88) ein aus dem Gehäuse (86) ragender Schaltzapfen (92) angeordnet ist.

FIG.1

0 199 063

FIG.2

0 199 063

FIG.3

FIG.5

FIG.4

0 199 063

234

240    236

244

248

238

246

250

242

232

252

230

**FIG.6**

232

240

238

230

246

252

**FIG.7**